# EUROPÄISCHE PATENTSCHRIFT

(11) **EP 2 738 715 B1**
(45) Veröffentlichungstag und Bekanntmachung des Hinweises auf die Patenterteilung: **06.07.2016**
(21) Anmeldenummer: 13005045.3
(22) Anmeldetag: 22.10.2013
(51) Int. Cl.: G06K 19/077, H01Q 7/04, H01Q 1/22

(54) **Tube Tag**
Tube tag
Tube Tag

(30) Priorität: 30.11.2012 DE 102012023444
(43) Veröffentlichungstag der Anmeldung: 04.06.2014
(73) Patentinhaber: Giesecke & Devrient GmbH, 81677 München (DE)
(72) Erfinder: Finkenzeller, Klaus, 85774 Unterföhring (DE); Baldischweiler, Michael, 81825 München (DE); Luyken, Johannes, Dr., 81825 München (DE)

(56) Entgegenhaltungen:
- DE-A1- 19 507 721

## Beschreibung

Die Erfindung offenbart einen Transponder, welcher robust gegenüber äußeren mechanischen Einflüssen ist und der auf unterschiedlichen Frequenzen betrieben werden kann.

Bekannt nach dem Stand der Technik sind elektrisch abgeschirmte magnetische Loop-Antennen. Diese werden beispielweise aus einem Koaxialkabel hergestellt, wobei der Innenleiter als magnetische Antenne dient und der Schirm des Koaxialkabels der Abschirmung statischer elektrischer Felder dient.

Dies führt zur Erkenntnis, dass eine röhrenförmige, leitfähige und nicht ferromagnetische Abschirmung um eine Spulenwindung keinen, oder nur geringen Einfluss auf die magnetische Kopplung mit einem externen (elektro-) magnetischen Feld ausübt. Entscheidend ist dabei, dass diese Abschirmung keine geschlossene Spulenwindung darstellt, da ansonsten ein Strom fließen würde, welcher unerwünscht auf die umschlossene Spulenwindung zurückwirken würde. Entsprechend der Lenzschen Regel erzeugt ein Strom in einer geschlossenen Spulenwindung ein Magnetfeld, welches einem externen Magnetfeld entgegen gerichtet ist und das externe Feld auszulöschen versucht.

Bekannt nach dem Stand der Technik sind auch RFID-Tags, die auf zwei unterschiedlichen Frequenzen kommunizieren können. Meist werden dabei zwei unterschiedliche, konstruktiv getrennte Antennen für die unterschiedlichen Frequenzbereiche eingesetzt.

Aus dem Stand der Technik ist eine Dual-Frequency Antenne für die Frequenzbereiche 868 MHz und 13,56 MHz bekannt. Diese Antenne ist beispielsweise auf einer Leiterplatte realisiert und zum Beispiel auch für die Integration in einer Chipkarte geeignet.

Ferner sind aus dem Stand der Technik RFID-Transponder mit gewickelter Antenne bekannt, insbesondere in den Frequenzbereichen unterhalb von 30 MHz, also induktiv gekoppelten RFID-Systemen.

Induktiv gekoppelte Transponder nach dem Stand der Technik sind Angriffen durch mechanische Kräfte in der Regel weitgehend schutzlos ausgesetzt. So kann eine Antennenspule aus gewickeltem Draht leicht mit einer Schere durchtrennt werden, wodurch ein solcher Transponder unter anderem dauerhaft deaktiviert wird. Auch in rauer Umgebung kann eine solche Antennenspule durch Umgebungseinflüsse ggf. zerstört werden.

Zudem gibt es Anwendungsfelder, bei denen es vorteilhaft ist, wenn der Transponder aus optischen Gründen teilweise in einer metallischen Umgebung verborgen ist, z.B. sogenannter intelligenter Schmuck.

DE 195 07 721 Al offenbart eine Transponderanordnung für ein Abfragesystem, welches durch Einsatz einer vom Transponderkörper getrennten Antenne eine starke Ankopplung an ein elektromagnetisches Abfragefeld eines Abfragegeräts bei gleichzeitig geringen Abmessungen des Transponder-Trägerkörpers ermöglicht. Bevorzugt enthält die Anordnung einen Transponderkörper mit einer eigenen Sende-Empfangs-Spule, die mit einer Koppelspule verkoppelt ist, die wiederum mit der Antenne verbunden ist. Die Erfindung ermöglicht die Vergrößerung der Reichweite eines Abfragesystems. Ausgehend vom Stand der Technik ist es Aufgabe der Erfindung einen Transponder so auszugestalten, dass dieser die Möglichkeit bietet robust und gegenüber mechanischen Einflüssen bzw. Einwirkungen unempfindlich zu sein. Des Weiteren soll der Transponder derart ausgestaltet sein, dass er wahlweise auf HF- oder UHF-RFID-Frequenzen betrieben werden kann,

Die Aufgabe der Erfindung wird durch den unabhängigen Anspruch gelöst. Vorteilhafte Ausführungen sind in den abhängigen Ansprüchen beschrieben.

Zur Lösung der Aufgabe offenbart die Erfindung einen Transponder, welcher einen metallischen Hohlkörper umfasst, dessen Enden sich gegenüberliegen ohne sich zu berühren. Im Hohlkörper ist mindestens eine Antennenspule angeordnet, welche mindestens eine Windung umfasst. Ferner weist der Transponder mindestens einen Chip auf, wobei der mindestens eine Chip mit der mindestens einen Antennenspule und/oder mit dem Hohlkörper verbunden ist. Vorteilhaft ist, dass die Antennenspule geschützt vor mechanischen Einflüssen sich im metallischen Hohlkörper befindet. Ferner sind eine Antenne in Form der Antennenspule und eine Antenne in Form des Hohlkörpers vorhanden. Mit diesen beiden Antennen ist eine Kommunikation auf zwei verschiedenen Frequenzbereichen möglich.

Ein vorteilhaftes Ausführungsbeispiel der Erfindung ist, dass die mindestens eine Antennenspule und der Hohlkörper elektrisch seriell oder parallel mit dem Chip verbunden sind.

Ein weiteres vorteilhaftes Ausführungsbeispiel der Erfindung ist, dass mindestens ein Ende der mindestens einen Antennenspule mit mindestens einem Kontakt des mindestens einen Chips und einem Ende des Hohlkörpers verbunden ist.

Ein weiteres vorteilhaftes Ausführungsbeispiel der Erfindung ist, dass der mindestens eine Chip zwischen den Enden des Hohlkörpers angeordnet ist.

Ein weiteres vorteilhaftes Ausführungsbeispiel der Erfindung ist, dass der mindestens eine Chip, welcher zwischen den Enden des Hohlkörpers angeordnet ist, mittels einer Abdeckung mechanisch geschützt ist.

Ein weiteres vorteilhaftes Ausführungsbeispiel der Erfindung ist, dass die mindestens eine Antennenspule und der mindestens eine Chip im Hohlkörper angeordnet sind.

Ein weiteres vorteilhaftes Ausführungsbeispiel der Erfindung ist, dass der Hohlkörper zumindest teilweise mit einer Vergussmasse ausgefüllt ist um mindestens die mindestens eine Antennenspule mechanisch zu fixieren. Ein weiteres vorteilhaftes Ausführungsbeispiel der Erfindung ist, dass die Vergussmasse nicht schrumpft.

Ein weiteres vorteilhaftes Ausführungsbeispiel der Erfindung ist, dass mindestens ein Anpassnetzwerk zwischen dem mindestens einen Chip und der mindestens einen Antennenspule angeordnet ist.

Ein weiteres vorteilhaftes Ausführungsbeispiel der Erfindung ist, dass mindestens ein Anpassnetzwerk zwischen dem mindestens einen Chip und dem Hohlkörper angeordnet ist.

Ein weiteres vorteilhaftes Ausführungsbeispiel der Erfindung ist, dass die mindestens eine Antennenspule eingerichtet ist, um die mindestens eine Antennenspule als Antenne im Hochfrequenz-(HF)-Bereich zu betreiben.

Ein weiteres vorteilhaftes Ausführungsbeispiel der Erfindung ist, dass der Hohlkörper auf der Innenseite und/oder der Außenseite mindestens eine aufgebrachte weitere metallische Oberfläche aufweist. Dies läßt sich vorteilhaft nutzen um eine weitere Antenne zu realisieren.

Ein weiteres vorteilhaftes Ausführungsbeispiel der Erfindung ist, dass ein Ende des Hohlkörpers eine Buchse und ein anderes Ende einen Stecker aufweist, wobei in der Buchse und im Stecker jeweils mindestens ein Kontakt angeordnet ist, über den die mindestens eine Windung der mindestens einen Antennenspule verbunden wird, wenn der Stecker in die Buchse gesteckt wird.

Ein weiteres vorteilhaftes Ausführungsbeispiel der Erfindung ist, dass die mindestens eine Antennenspule aus mindestens einem isolierten Draht besteht.

Ein weiteres vorteilhaftes Ausführungsbeispiel der Erfindung ist, dass der Querschnitt und/ oder die Form des Hohlkörpers kreisförmig und/ oder eckig ausgeführt ist.

Ein weiteres vorteilhaftes Ausführungsbeispiel der Erfindung ist, dass der Transponder ein RFID-Transponder ist.

Im Folgenden werden Ausführungsbeispiele der Erfindung anhand der beigefügten Figuren detailliert beschrieben.

Es zeigen
Figur 1 einen erfindungsgemäßen Transponder,
Figur 2 ein Ausführungsbeispiel des Transponders, wobei die Antennenspule mit dem Chip verbunden ist,
Figur 3 ein Ausführungsbeispiel des Transponders, wobei das Metallrohr mit dem Chip verbunden ist,
Figur 4 ein Ausführungsbeispiel eines Transponders, bei dem die Antennenspule und das Metallrohr parallel am Chip angeschlossen sind,
Figur 5 ein Ausführungsbeispiel eines Transponders, welcher ein Metallrohr mit einer Abdeckung über den Enden des Metallrohres aufweist,
Figuren 6 und 7 Ausführungsbeispiele für die Abdeckung,
Figur 8 ein Ausführungsbeispiel eines Transponders, bei dem die Enden der Spule im Inneren des Metallrohres mittels einem Stecker und einer Buchse verbunden werden.

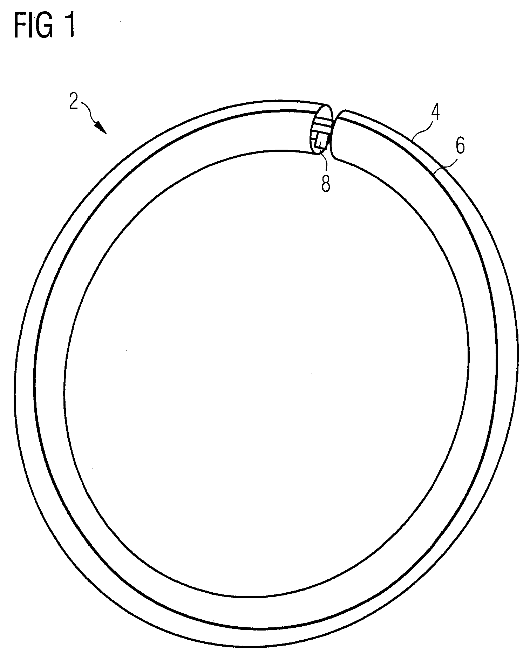

Figur 1 zeigt einen erfindungsgemäßen Transponder 2. Der Transponder 2 weist einen metallischen Hohlkörper, z.B. ein Metallrohr 4 auf, das ringförmig um weniger als 360 Grad gebogen ist. Alternativ kann das Metallrohr 4 auch eckig, z.B. rechteckig, gebogen sein. Wichtig ist, dass die sich gegenüberliegenden Enden des Rohres 4 nicht berühren. Damit besteht zwischen den Enden kein elektrisch leitender Kontakt. Das darf auch nicht sein, da sonst eine geschlossene, elektrisch leitende Leiterschleife entstehen würde. Diese Leiterschleife würde als sogenannte Einwindungsspule wirken und eine Antennenspule 6, welche sich im Rohr 4 befindet, gemäß der Lenzschen Regel unerwünscht stark dämpfen.

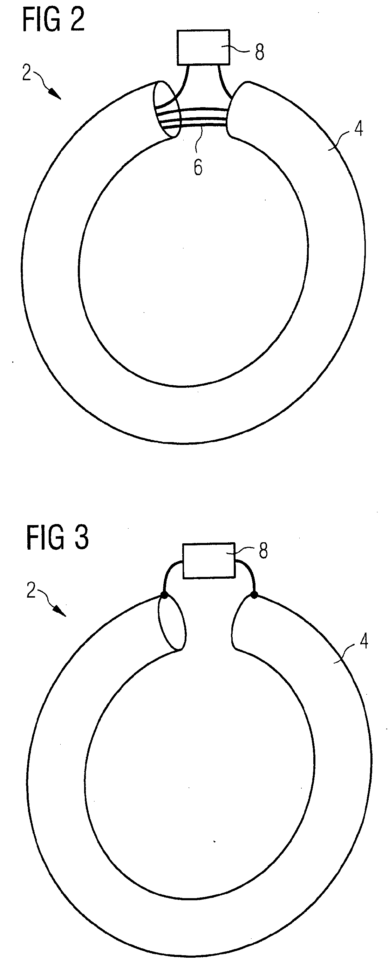

Figur 2 zeigt ein Ausführungsbeispiel des Transponders 2, welcher ein Metallrohr 4 aufweist, in dem sich eine Antennenspule 6 mit mehreren Windungen befindet. Alternativ können sich auch mehrere Antennenspulen im Metallrohr 8 befinden. Die Antennenspule 6 ist mit dem Chip 8 verbunden. Alternativ können auch mehrere Chips 8 verwendet werden, beispielsweise für mehrere Paare von Antennenspulen 6, welche mit einem Chip 8 verbunden sind. Die Antennenspule 6 besteht vorzugsweise aus mindestens einem isolierten Draht. Ein Ende der Antennenspule 6 kann alternativ sowohl mit dem Chip 8 bzw. mit einem Kontakt von Chip 8 als auch mit einem Ende des Metallrohres 4 verbunden sein, was figürlich nicht dargestellt ist. Die Antennenspule 6 ist vorzugsweis dazu ausgelegt, dass der Transponder 2 im HF-Bereich, z.B. bei 13, 56 MHz, eingesetzt wird.

Figur 3 zeigt einen Transponder 2, bei dem das Metallrohr 4 mit dem Chip 8 verbunden ist, ohne dass sich eine Antennenwindung im Metallrohr 4 befindet. Der Durchmesser des gebogenen Metallrohres 4 wird allgemein so gewählt, dass die Antenne, welche durch das Metallrohr 4 gebildet wird, im UHF-Bereich, beispielsweise bei 865 MHz, 915 MHz oder 2,45 GHz liegt. Der Durchmesser des Metallrohres liegt dabei typischerweise im Bereich von 1 bis 5 Zentimetern.

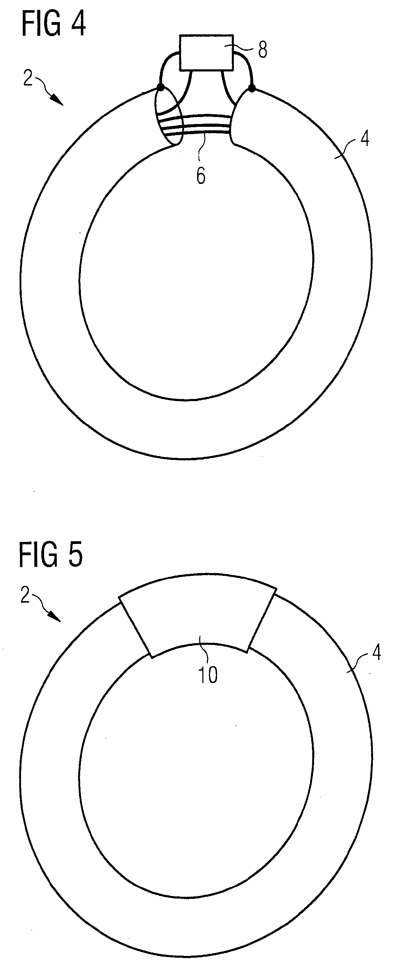

Figur 4 zeigt ein Ausführungsbeispiel eines Transponders 2, bei dem die Antennenspule 6 und das Metallrohr 4 parallel am Chip 8 angeschlossen sind. Alternativ können die Antennenspule 6 und das Metallrohr 8 elektrisch seriell mit dem Chip 8 verbunden sein. Bei dem Chip 8 handelt es sich beispielsweise um einen mehrfrequenzfähigen Chip, einen sogenannten dual frequency chip, wie er beispielsweise für RFID-Anwendungen eingesetzt wird. Der Chip 8 verfügt dazu über wenigstens drei Kontakte, vorteilhafterweise über vier Kontakte zum Anschluss der Antennenspule 6 und des Metallrohres 4. Vorteilhafterweise kann ein derart ausgestalteter Transponder 2 wahlweise in einem HF-Feld für eine induktive Kopplung, beispielsweise bei 13,56 MHz, oder in einem UHF-Feld, beispielsweise bei 865 MHz, 915 MHz oder 2,45 GHz, betrieben werden, um beispielsweise auf eine größere Entfernung Daten aus dem Transponder 2 auszulesen.

Für die Erfindung gilt allgemein, dass mindestens ein Anpassnetzwerk zwischen dem Chip 8 und der Antennenspule 6 angeordnet ist. Das Anpassnetzwerk wurde in den Figuren nicht dargestellt. Das Anpassnetzwerk kann als eigene Baugruppe oder integriert auf dem Chip 8 ausgeführt werden. Falls der Chip 8 mit dem Metallrohr 4, bzw. allgemein mit einem metallischen Hohlkörper, verbunden wird, dann wird auch zwischen Chip 8 und Metallrohr 4 ein Anpassnetzwerk angeordnet.

Der Chip 8 kann generell zwischen den Enden des Metallrohres 4 oder in dem Metallrohr 4, sprich einem metallischen Hohlkörper, angeordnet werden. Das Metallrohr 4 ist vorzugsweise zumindest teilweise mit einer Vergussmasse ausgefüllt um mindestens die Antennenspule 6 mechanisch zu fixieren. Vorzugsweise wird dazu eine Vergussmasse verwendet, die nicht schrumpft, wie z.B. ein Harz.

Falls der Chip zwischen den Enden des Metallrohres 8 angeordnet wird, dann wird der Chip 8 mittels einer Abdeckung 10 vor mechanischen Einwirkungen geschützt.

Figur 5 zeigt einen Transponder 2, welcher ein Metallrohr 4 mit einer Abdeckung 10 über den Enden des Metallrohres 4 aufweist. Bei der Abdeckung 10 handelt es sich beispielsweise um eine Vergussmasse, einen Schrumpfschlauch oder eine sonstige geeignete mechanische Abdeckung. Wichtig ist, dass die Abdeckung 10 elektrisch nicht leitend ist, wie bereits oben beschrieben. Ferner ist wichtig, dass die Abdeckung 10 nicht magnetisch ist.

Die Antennenspule 6 des Transponders ist dafür eingerichtet, um sie als Antenne im Hochfrequenz-(HF)-Bereich zu betreiben. Das Metallrohr 4, bzw. allgemein der metallische Hohlkörper, ist dazu eingerichtet, um es als Antenne im Ultrahochfrequenz-(UHF)-Bereich zu betreiben.

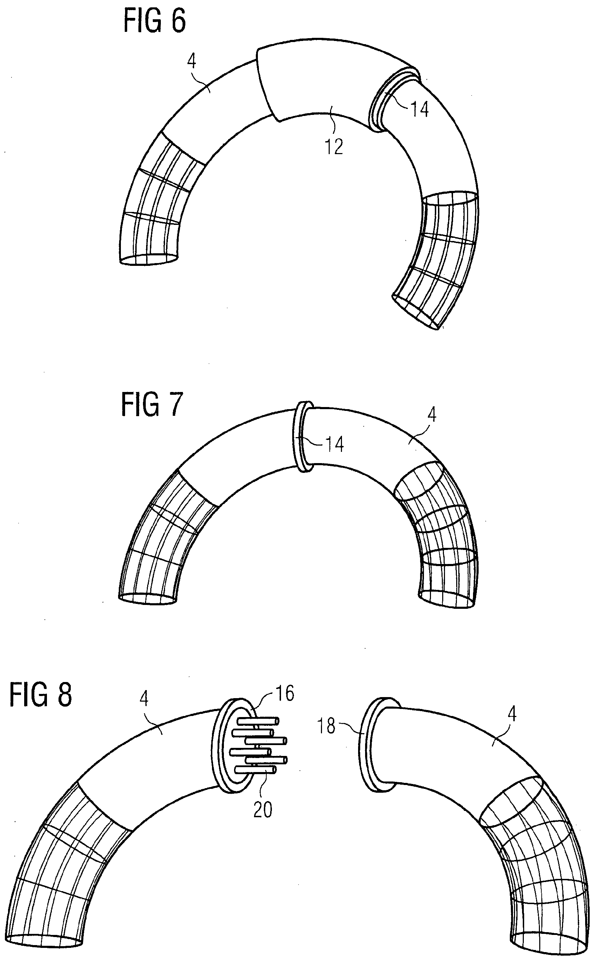

Figuren 6 und 7 zeigen Ausführungsbeispiele für die Abdeckung 10. In Figur 6 ist über dem Metallrohr 4 zur Verbindung der Enden des Metallrohrs 4 ein metallischer Röhrenabschnitt 12 angeordnet. Damit keine elektrisch leitende Verbindung zwischen den Enden des Metallrohres 4 entsteht, befindet sich eine isolierende Schicht 14 zwischen dem Metallrohr 4 und dem metallischen Röhrenabschnitt 12. Figur 7 zeigt ein Ausführungsbeispiel, in dem die Enden des Metallrohres 4 mittels einer zwischen den Enden angeordneten isolierenden Schicht 14, beispielsweise in Form einer Scheibe oder eines Ringes, verbunden werden.

Figur 8 zeigt ein Ausführungsbeispiel eines Transponders 2, bei dem die Enden der Antennenspule 6 im Inneren des Metallrohres 4 mittels eines Steckers 16 und einer Buchse 18 verbunden werden. Am Stecker 16 befindet sich mindestens ein Kontakt 20, welcher mit den Enden der Windungen der Antennenspule 6 auf der Seite des Steckers 16 verbunden ist. Auf der Seite der Buchse 18 sind eine der Anzahl der Kontakte 20 entsprechende Zahl von Gegenkontakten angeordnet, wobei die Gegenkontakte mit den anderen Enden der Windungen der Antennenspule 6 auf der Seite der Buchse 18 verbunden sind. Wird der Stecker 16 in die Buchse 18 gesteckt, so werden die Enden der Windungen der Antennenspule 6 auf der Seite des Steckers 16 mit den Enden der Windungen der Antennenspule 6 auf der Seite der Buchse 18 miteinander elektrisch leitend verbunden, indem zwischen den Kontakten 20 und den entsprechenden Gegenkontakten eine elektrisch leitfähige Verbindung hergestellt wird.

Das Metallrohr 4, bzw. der Hohlkörper, kann auf der Innenseite und/ oder der Außenseite mindestens eine aufgebrachte weitere metallische Oberfläche aufweisen. Dies kann dazu dienen, um eine weitere Antenne herzustellen.

Das Metallrohr 4 kann jede geeignete Form aufweisen. Bevorzugte Formen sind ringförmig oder eckig ausgebildet.
Vorzugsweise ist der erfindungsgemäße Transponder 2 ein RFID-Transponder.

Offenbart wird ferner ein Verfahren zur Herstellung eines Transponders 2 gemäß den oben beschriebenen technischen Merkmalen. Die Herstellung eines erfindungsgemäßen Transponders 2 kann z.B. derart erfolgen, dass vor dem Einbringen der Windungen der Antennenspule 6 die Enden des Metallrohres 4 leicht versetzt werden. Auf einer Seite des Metallrohres 4 wird ein leichter Unterdruck angelegt. Dieser reicht aus um die Windungen der Antennenspule 6 durch das gebogene Rohr "zu zehen". Für Mehrfachwindungen kann ein Aufnehmer den Draht der Antennenspule 6 kurz aufnehmen und erneut "einfädeln".

Ein mögliches Anwendungsbeispiel der Erfindung ist ein Einsatz in der Logistik. RFID Tags werden hier bereits in großem Umfang in der Logistik eingesetzt. Bei Verwendung eines erfindungsgemäßen Transponders 2, welcher mechanisch robuster ist als die dort bisher eingesetzten RFID Tags, wird die Betriebssicherheit erhöht und neue Anwendungsfelder erschlossen. Zudem ist eine Mehrfachverwendung der erfindungsgemäßen Transponder 2 leichter möglich, als dies bei den bisher eingesetzten RFID Tags der Fall ist.

Ein weiteres mögliches Anwendungsbeispiel des erfindungsgemäßen Transponders 2 ist der Einsatz bei "Smart Jewellery", d.h. die Verwendung von erfindungsgemäßen Transpondern 2 in Schmuckstücken. Die erfindungsgemäßen Transponder 2 können dazu verwendet werden Schmuckstücke mit RFID Funktionalität zu versehen. Beispielhaft sei hier eine Ausführung als Smart Ring genannt. Ein derartiger Ring kann im Wesentlichen wie eine kontaktlose Karte verwendet werden, z.B. zum Bezahlen oder zur Authentisierung.

Ein weiteres mögliches Anwendungsbeispiel der Erfindung ist der Einsatz des erfindungsgemäßen Transponders 2 in einer Rolle eines Koffers. Gegenwärtig wird an Flughäfen bei der Gepäckrückgabe keine Verifikation der Gepäckstücke, d.h. eine Zuordnung eines Gepäckstücks zum Besitzer, durchgeführt. Durch einen erfindungsgemäßen Transponder 2 können die Gepäckstücke eindeutig den Besitzern zugeordnet werden, allerdings ist dies insbesondere bei Verwendung von metallischen Koffern problematisch. Durch eine Integration eines erfindungsgemäßen Transponders 2 in die Rollen von Koffern kann das Problem von metallischen Koffern umgangen werden.

### Bezugszeichenliste

- 2: Transponder
- 4: Metallrohr
- 6: Antennenspule
- 8: Chip
- 10: Abdeckung
- 12: metallischer Röhrenabschnitt
- 14: isolierende Schicht
- 16: Stecker
- 18: Buchse
- 20: Kontakte

## Patentansprüche

1. Transponder (2), welcher **folgende** Elemente umfasst:
- einen metallischen Hohlkörper (4), dessen Enden sich gegenüberliegen ohne sich zu berühren,
- mindestens eine Antennenspule (6), welche mindestens eine Windung umfasst, wobei die mindestens eine Antennenspule (6) im Hohlkörper (4) angeordnet ist,
- mindestens einen Chip (8), wobei der mindestens eine Chip (8) mit der mindestens einen Antennenspule (6) und/ oder mit dem Hohlkörper (4) verbunden ist,
**dadurch gekennzeichnet, dass** der Hohlkörper (4) eingerichtet ist, um den Hohlkörper (4) als Antenne im Ultrahochfrequenz-(UHF)-Bereich zu betreiben.

2. Transponder (2) nach Anspruch 1, **dadurch gekennzeichnet, dass** die mindestens eine Antennenspule (6) und der Hohlkörper (4) elektrisch seriell oder parallel mit dem Chip (8) verbunden sind.

3. Transponder (2) nach einem der vorher gehenden Ansprüche,
**dadurch gekennzeichnet, dass** mindestens ein Ende der mindestens einen Antennenspule (6) mit mindestens einem Kontakt des mindestens einen Chips (8) und einem Ende des Hohlkörpers (4) verbunden ist.

4. Transponder (2) nach einem der vorher gehenden Ansprüche,
**dadurch gekennzeichnet, dass** der mindestens eine Chip (8) zwischen den Enden des Hohlkörpers (4) angeordnet ist.

5. Transponder (2) nach einem der vorher gehenden Ansprüche,
**dadurch gekennzeichnet, dass** der mindestens eine Chip (8), welcher zwischen den Enden des Hohlkörpers (4) angeordnet ist, mittels einer Abdeckung (10) mechanisch geschützt ist.

6. Transponder (2) nach einem der vorher gehenden Ansprüche,
**dadurch gekennzeichnet, dass** die mindestens eine Antennenspule (6) und der mindestens eine Chip (8) im Hohlkörper (4) angeordnet sind.

7. Transponder (2) nach einem der vorher gehenden Ansprüche,
**dadurch gekennzeichnet, dass** der Hohlkörper (4) zumindest teilweise mit einer Vergussmasse ausgefüllt ist um mindestens die mindestens eine Antennenspule (6) mechanisch zu fixieren.

8. Transponder (2) nach einem der vorher gehenden Ansprüche,
**dadurch gekennzeichnet, dass** die Vergussmasse nicht schrumpft.

9. Transponder (2) nach einem der vorher gehenden Ansprüche,
**dadurch gekennzeichnet, dass** mindestens ein Anpassnetzwerk zwischen dem mindestens einen Chip (8) und der mindestens einen Antennenspule (6) angeordnet ist.

10. Transponder (2) nach einem der vorher gehenden Ansprüche,
**dadurch gekennzeichnet, dass** mindestens ein Anpassnetzwerk zwischen dem mindestens einen Chip (8) und dem Hohlkörper (4) angeordnet ist.

11. Transponder (2) nach einem der vorher gehenden Ansprüche,
**dadurch gekennzeichnet, dass** die mindestens eine Antennenspule (6) eingerichtet ist, um die mindestens eine Antennenspule (6) als Antenne im Hochfrequenz-(HF)-Bereich zu betreiben.

12. Transponder (2) nach einem der vorher gehenden Ansprüche,
**dadurch gekennzeichnet, dass** der Hohlkörper (4) auf der Innenseite und/oder der Außenseite mindestens eine aufgebrachte weitere metallische Oberfläche aufweist.

13. Transponder (2) nach einem der vorher gehenden Ansprüche,
**dadurch gekennzeichnet, dass** ein Ende des Hohlkörpers (4) eine Buchse (18) und ein anderes Ende einen Stecker (16) aufweist, wobei in der Buchse (18) und im Stecker (16) jeweils mindestens ein Kontakt (20) angeordnet ist, über den die mindestens eine Windung der mindestens einen Antennenspule (6) verbunden wird, wenn der Stecker (16) in die Buchse (18) gesteckt wird.

## Claims

1. A transponder (2) comprising the following elements:
- a metallic hollow body (4), the ends of which are disposed mutually opposite without touching one another,
- at least one antenna coil (6), which comprises at least one turn, wherein the at least one antenna coil (6) is arranged in the hollow body (4),
- at least one chip (8), wherein the at least one chip (8) is connected to the at least one antenna coil (6) and/or to the hollow body (4),
**characterized in that** the hollow body (4) is adapted to operate the hollow body (4) as an antenna in the ultrahigh frequency (UHF) range.

2. The transponder (2) according to claim 1, **characterized in that** the at least one antenna coil (6) and the hollow body (4) are electrically connected in series or in parallel with the chip (8).

3. The transponder (2) according to any of the preceding claims, **characterized in that** at least one end of the at least one antenna coil (6) is connected to at least one contact of the at least one chip (8) and one end of the hollow body (4).

4. The transponder (2) according to any of the preceding claims, **characterized in that** the at least one chip (8) is arranged between the ends of the hollow body (4).

5. The transponder (2) according to any of the preceding claims, **characterized in that** the at least one chip (8) arranged between the ends of the hollow body (4), is protected mechanically by means of a cover (10).

6. The transponder (2) according to any of the preceding claims, **characterized in that** the at least one antenna coil (6) and the at least one chip (8) are arranged in the hollow body (4).

7. The transponder (2) according to any of the preceding claims, **characterized in that** the hollow body (4) is filled at least partially with a casting compound to mechanically fix the at least one antenna coil (6).

8. The transponder (2) according to any of the preceding claims, **characterized in that** the casting compound does not shrink.

9. The transponder (2) according to any of the preceding claims, **characterized in that** at least one matching network is arranged between the at least one chip (8) and the at least one antenna coil (6).

10. The transponder (2) according to any of the preceding claims, **characterized in that** at least one matching network is arranged between the at least one chip (8) and the hollow body (4).

11. The transponder (2) according to any of the preceding claims, **characterized in that** the at least one antenna coil (6) is adapted to operate the at least one antenna coil (6) as an antenna in the high frequency (HF) range.

12. The transponder (2) according to any of the preceding claims, **characterized in that** the hollow body (4) has at least one applied further metallic surface on the inside and/or the outside.

13. The transponder (2) according to any of the preceding claims, **characterized in that** one end of the hollow body (4) has a socket (18) and a different end has a connector (16), wherein in the socket (18) and in the connector (16) in each case at least one contact (20) is arranged, via which the at least one turn of the at least one antenna coil (6) is connected when the connector (16) is inserted into the socket (18).

## Revendications

1. Transpondeur (2), lequel comprend les éléments suivants:
- un corps creux (4) métallique dont les extrémités se font face sans se toucher,
- au moins une bobine d'antenne (6), laquelle comprend au moins un enroulement, la au moins une bobine d'antenne (6) étant agencée dans le corps creux (4),
- au moins une puce (8), la au moins une puce (8) étant reliée à la au moins une bobine d'antenne (6) et/ou au corps creux (4),
**caractérisé en ce que** le corps creux (4) est conçu pour exploiter le corps creux (4) en tant qu'antenne dans la gamme d'hyperfréquences (UHF).

2. Transpondeur (2) selon la revendication 1, **caractérisé en ce que** la au moins une bobine d'antenne (6) et le corps creux (4) sont reliés en série ou en parallèle avec la puce (8).

3. Transpondeur (2) selon une des revendications précédentes, **caractérisé en ce qu**'au moins une extrémité de la au moins une bobine d'antenne (6) est reliée à au moins un contact de la au moins une puce (8) et à une extrémité du corps creux (4).

4. Transpondeur (2) selon une des revendications précédentes, **caractérisé en ce que** la au moins une puce (8) est agencée entre les extrémités du corps creux (4).

5. Transpondeur (2) selon une des revendications précédentes, **caractérisé en ce que** la au moins une puce (8) agencée entre les extrémités du corps creux (4) est protégée mécaniquement au moyen d'un recouvrement (10).

6. Transpondeur (2) selon une des revendications précédentes, **caractérisé en ce que** la au moins une bobine d'antenne (6) et la au moins une puce (8) sont agencées dans le corps creux (4).

7. Transpondeur (2) selon une des revendications précédentes, **caractérisé en ce que** le corps creux (4) est au moins partiellement rempli d'une masse de scellement afin de fixer mécaniquement au moins la au moins une bobine d'antenne (6).

8. Transpondeur (2) selon une des revendications précédentes, **caractérisé en ce que** la masse de scellement ne se rétrécit pas.

9. Transpondeur (2) selon une des revendications précédentes, **caractérisé en ce qu**'au moins un réseau d'adaptation est agencé entre la au moins une puce (8) et la au moins une bobine d'antenne (6).

10. Transpondeur (2) selon une des revendications précédentes, **caractérisé en ce qu**'au moins un réseau d'adaptation est agencé entre la au moins une puce (8) et le corps creux (4).

11. Transpondeur (2) selon une des revendications précédentes, **caractérisé en ce que** la au moins une bobine d'antenne (6) est conçue pour exploiter la au moins une bobine d'antenne (6) en tant qu'antenne dans la gamme de hautes fréquences (HF).

12. Transpondeur (2) selon une des revendications précédentes, **caractérisé en ce que** le corps creux (4) comporte sur la face intérieure et/ou sur la face extérieure au moins une surface métallique supplémentaire appliquée.

13. Transpondeur (2) selon une des revendications précédentes, **caractérisé en ce qu**'une extrémité du corps creux (4) comporte une prise (18) et une autre extrémité comporte une fiche (16), cependant que, dans la prise (18) et dans la fiche (16), respectivement au moins un contact (20) est agencé, par l'intermédiaire duquel le au moins un enroulement de la au moins une bobine d'antenne (6) est relié quand la fiche (16) est enfichée dans la prise (18).
